Europäisches Patentamt

European Patent Office

Office européen des brevets

(11) Numéro de publication : **0 321 319 B1**

## (12) FASCICULE DE BREVET EUROPEEN

(45) Date de publication du fascicule du brevet :
02.05.91 Bulletin 91/18

(21) Numéro de dépôt : **88402909.1**

(22) Date de dépôt : **18.11.88**

(51) Int. Cl.⁵ : **F16D 43/14**

(54) **Embrayage centrifuge pour actionneur de condamnation d'une serrure de porte de véhicule automobile.**

(30) Priorité : **14.12.87 FR 8717423**

(43) Date de publication de la demande :
**21.06.89 Bulletin 89/25**

(45) Mention de la délivrance du brevet :
**02.05.91 Bulletin 91/18**

(84) Etats contractants désignés :
**DE ES GB IT SE**

(56) Documents cités :
**EP-A- 0 233 820**
**FR-A- 1 396 044**
**FR-A- 2 106 250**
**FR-A- 2 485 977**
**FR-A- 2 529 977**
**GB-A- 528 856**
**US-A- 2 754 948**
**US-A- 3 367 465**

(73) Titulaire : **ROCKWELL AUTOMOTIVE BODY SYSTEMS-FRANCE EN ABREGE:ROCKWELL ABS-FRANCE**
**Tour Gan Cédex 13**
**F-92082 Paris La Defense 2 (FR)**

(72) Inventeur : **Noel, Jean-Pierre**
**100 rue Gaston Save**
**F-88100 Saint Die (FR)**

(74) Mandataire : **Martin, Jean-Paul et al**
**c/o CABINET LAVOIX 2, Place d'Estienne d'Orves**
**F-75441 Paris Cedex 09 (FR)**

## Description

La présente invention a pour objet un embrayage centrifuge destiné à être interposé entre un moteur électrique et un train d'engrenages d'entraînement d'une vis sur laquelle est monté un manchon taraudé de commande d'un organe de condamnation.

Cet embrayage est du type comportant au moins une masselotte et de préférence deux, disposée(s) dans une cloche radialement à l'arbre de sortie du moteur, soumise(s) à l'action d'un organe élastique de rappel vers une position débrayée au repos et susceptible(s) d'être entraînée(s) par la rotation de l'arbre du moteur dans une position d'embrayage où elle(s) est (sont) en prise avec la cloche. Cette dernière est munie d'un pignon d'entraînement du train d'engrenages, et la (les) masselotte(s) est (sont) montée(s) dans un support constitué par un moyeu pourvu de deux branches sensiblement axiales entourant la (les) masselotte(s) en délimitant un logement pour celle(s)-ci, et par un couvercle fermant ce logement, fixé sur le moyeu. Ce couvercle et le moyeu sont agencés pour permettre le déplacement radial de la (des) masselotte(s) vers la cloche sous l'effet de la force centrifuge. Un tel embrayage est décrit dans le document EP-A-0233820.

Cet embrayage donne satisfaction, mais il a été toutefois constaté, que les chocs provoqués par l'arrêt brutal du moteur, en fin de course de l'actionneur, provoquent un rebond qui peut entraîner un débrayage intempestif des masselottes, par manque de pression de contact sur leurs taquets d'entraînement dont est pourvue intérieurement la cloche et qui coopèrent avec les masselottes.

L'invention a donc pour but de proposer un perfectionnement évitant cet inconvénient.

Suivant l'invention, la cloche est munie intérieurement d'un ressort contraint en appui de friction sur la paroi intérieure de la cloche, et pourvu d'au moins un taquet d'embrayage et de préférence deux, susceptible(s) de coopérer avec la (les) masselotte(s), la fonction de ce ressort étant d'entraîner en rotation par friction la cloche et son pignon lorsque la (les) masselotte(s) est (sont) en position d'embrayage.

Lors de couples importants dûs à l'inertie des pièces, ce ressort glisse par rapport à la cloche, ce qui a pour effet de supprimer pratiquement le rebond.

L'invention sera maintenant décrite en référence au dessin annexé qui en illustre une forme de réalisation à titre d'exemple non limitatif :

    – la Figure 1 est une vue en perspective, d'un actionneur de condamnation d'un serrure de porte de véhicule automobile, muni d'un embrayage pouvant être du type visé par l'invention ;

    – la Figure 2 est une vue en coupe axiale d'un mode de réalisation d'un embrayage centrifuge conforme à l'invention, pouvant équiper l'actionneur de la Figure 1 ;

    – la Figure 3 est une vue en coupe axiale suivant III-III de la Figure 2 et ;

    – la Figure 4 est une vue en coupe transversale suivant IV-IV de la Figure 2.

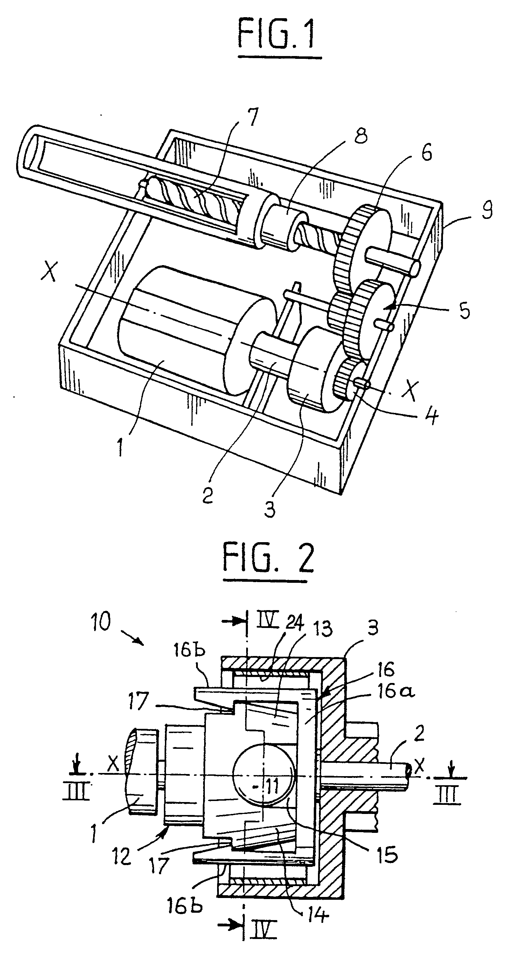

L'actionneur représenté à la Figure 1 est destiné à permettre la condamnation électrique d'une serrure non représentée d'une porte de véhicule automobile.

Il comporte un moteur électrique 1 équipé d'un arbre moteur de sortie 2 d'axe X-X, pouvant coopérer avec une cloche 3 coaxiale, munie d'un pignon 4 constituant le premier élément d'un train d'engrenages 5. Le dernier pignon 6 du train 5 est fixé à une vis 7 sur laquelle est monté un manchon 8 qui peut être entraîné en translation par la rotation de la vis 7, pour actionner l'organe de condamnation (non représenté) de la serrure, l'ensemble de ces pièces étant logé dans un boîtier 9.

L'embrayage 10 représenté aux Figures 2 à 4 comporte des masselottes 11, au nombre de deux dans cet exemple, montées mobiles radialement à l'arbre moteur 2 à l'intérieur de la cloche 3. Les masselottes 11 peuvent être de préférence des pièces cylindriques et sont montées dans un support constitué par deux pièces distinctes : un moyeu 11 pourvu de deux branches 13, 14 sensiblement axiales, à peu près parallèles à l'arbre 2 du moteur 1 en entourant les masselottes 11 et en délimitant un logement 15 pour celles-ci, la seconde pièce étant un couvercle 16 fermant le logement 15.

Le couvercle 16 comporte une partie 16a perpendiculaire à l'axe X-X et une seconde partie formée par deux bras 16b parallèles à l'axe X-X, solidarisés avec le moyeu 12 par exemple par clipsage sur des crans 17 de ce dernier. Le couvercle 16 est agencé pour permettre le déplacement radial des masselottes 11 vers la cloche 3 sous l'effet de la force centrifuge lorsque l'arbre 2 est entraîné par le moteur 1. Un palier 19 de support de l'arbre 2 est fixé à ce dernier au-delà du pignon 4.

Les masselottes 11 sont élastiquement sollicitées vers leur position de repos en appui sur l'arbre 2 dans des positions diamètralement opposées, par des ressorts respectifs 21 prenant appui sur des épaulements 20, 23 intérieurs, respectivement au moyeu 12 et au couvercle 16. Le logement 15 délimité par les branches 13, 14 et le couvercle 16 débouche radialement des deux côtés vers la paroi de la cloche 3, afin de permettre aux masselottes 11 de coulisser radialement vers celle-ci, contre la force de rappel des ressorts 21, lorsque l'arbre 2 tourne à une vitesse suffisante.

La cloche 3 est munie intérieurement d'un ressort contraint 24 disposé en appui de friction sur la paroi intérieure de la cloche 3, et pourvu de deux taquets d'embrayage 24a susceptibles de coopérer à tour de rôle avec les masselottes 1.

Ces deux taquets 24a sont réalisés de manière à présenter une surface coopérant avec la masselotte correspondante 11, inclinée de manière à être parallèle à des génératrices de la masselotte 11, lorsque cette dernière, de préférence cylindrique, coopère avec un taquet.

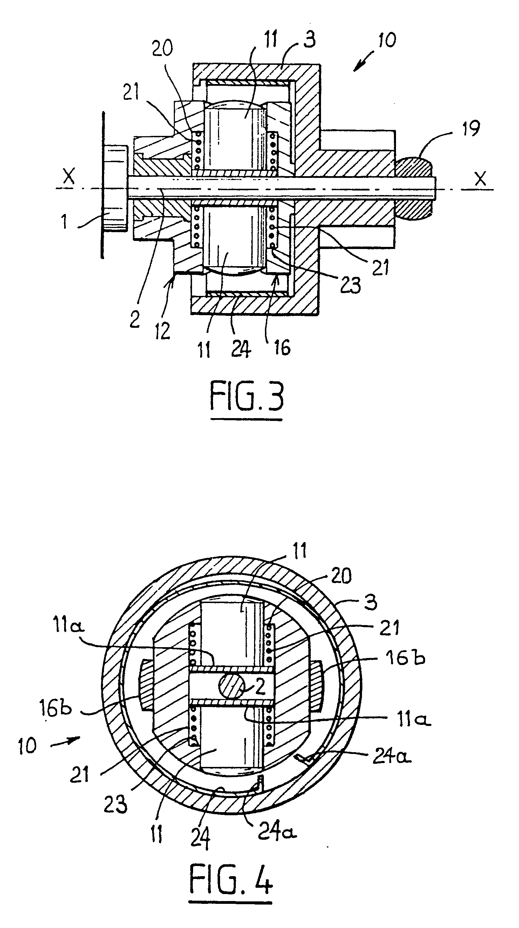

De préférence, le ressort 24 s'étend sur un secteur circulaire légèrement inférieur à une circonférence complète, ses extrémités opposées étant constituées par les taquets 24a, qui sont par conséquent relativement proches l'un de l'autre. Dans ces conditions, chaque taquet 24 a coopère avec l'une des deux masselottes 11 en fonction du sens de rotation de l'arbre 2, tandis que la seconde masselotte 11 vient s'appuyer sur une région à peu près centrale du ressort 24, écartée de la paroi intérieure de la cloche 3 lorsque les masselottes 11 sont au repos (Figure 4) et au contraire poussée contre cette paroi intérieure par la masselotte 11 qui ne coopère avec l'un des taquets 24a.

Lorsque l'arbre 2 tourne à une vitesse suffisante, les masselottes 11 s'écartent radialement et l'une d'elles vient en appui contre un taquet 24a, de sorte que le ressort 24 entraîne par friction la cloche 3 en rotation.

Lorsqu'il se produit un arrêt brutal de la rotation de la cloche 3 en fin de course de l'actionneur, le ressort 24 glisse sur la surface intérieure de la cloche 3, ce qui a pour résultat d'éviter les rebonds.

Un autre avantage du ressort 24 limiteur de couple prévu par l'invention consiste dans le fait qu'il réduit les contraintes dans le mécanismes de l'actionneur et dans l'embrayage lui-même. Il en résulte que l'on peut n'utiliser qu'une seule masselotte 11, la deuxième masselotte étant alors supprimée et son logement étant fermé.

Le ressort 24 comporte normalement deux taquets terminaux 24a éloignés d'une distance angulaire variable, un seul taquet pouvant toutefois éventuellement être réalisé, à condition de présenter deux surfaces opposées convenablement inclinées pour pouvoir coopérer à tour de rôle avec la ou les masselottes.

## Revendications

1. Embrayage centrifuge (10) pour actionneur de condamnation d'une serrure de porte de véhicule automobile, destiné à être interposé entre un moteur électrique (1) et un train d'engrenages (5) d'entraînement d'une vis (7) sur laquelle est monté un manchon taraudé (8) de commande d'un organe de condamnation, cet embrayage comportant au moins une masselotte (11) et de préférence deux, disposée(s) dans une cloche (3) radialement à l'arbre (2) de sortie du moteur (1), soumise(s) à l'action d'un organe élastique (21) de rappel vers une position débrayée au repos et susceptible d'être entraînée(s) par la rotation de l'arbre (2) du moteur (1) dans une position d'embrayage où elle(s) est (sont) en prise avec la cloche (3), cette dernière étant munie d'un pignon (4) d'entraînement du train d'engrenages (5), et la (les) masselotte(s) (11) est (sont) montée(s) dans un support constitué par un moyeu (12) pourvu de branches (13, 14) sensiblement axiales entourant la (les) masselotte(s) (11) en délimitant un logement (15) pour celle(s)-ci, et par un couvercle (16) fermant ce logement (15), fixé sur le moyeu (12), ce couvercle (16) et le moyeu (12) étant agencés pour permettre le déplacement radial de la (des) masselotte(s) (11) vers la cloche (3) sous l'effet de la force centrifuge, caractérisé en ce que la cloche (3) est munie intérieurement d'un ressort contraint (24) en appui de friction sur la paroi intérieure de la cloche, et pourvu d'au moins un taquet d'embrayage (24a) et de préférence deux, susceptibles de coopérer avec la (les) masselotte(s) (11), la fonction de ce ressort (24) étant d'entraîner en rotation par friction la cloche (3) et son pignon (4) lorsque la (les) masselotte(s) (11) est (sont) en position d'embrayage.

2. Embrayage selon la revendication 1, caractérisé en ce que le (ou les) taquet(s) (24a) présente(nt) une surface coopérant avec la (ou les) masselotte(s), inclinée de manière à être parallèle à des génératrices de la (ou des) masselotte(s), cette (ces) dernière(s) étant de préférence cylindrique(s).

## Ansprüche

1. Fliehkraftkupplung (10) für ein Verriegelungsglied eines Kraftfahrzeugtürverschlusses, welche für eine Anordnung zwischen einem Elektromotor (1) und einem Getriebezug (5) zum Antrieb einer Schnecke (7) bestimmt ist, auf welcher eine Gewindemuffe (8) zum Steuern eines Verriegelungselements angebracht ist, wobei diese Kupplung wenigstens ein und vorzugsweise zwei Fliehgewichte (11) aufweist, das (die) in einer Glocke (3) radial zur Ausgangswelle (2) des Motors (1) angeordnet und der Wirkung eines elastischen Elements (21) zum Rückholen in eine ausgekuppelte Ruhestellung unterworfen ist (sind) und durch die Drehung der Welle (2) des Motors (1) in eine eingekuppelte Stellung antreibbar ist (sind), wo es (sie) mit der Glocke (3) in Eingriff ist (sind), wobei letztere mit einem Antriebsritzel (4) für den Getriebezug (5) versehen ist, und wobei das (die) Fliehgewicht(e) (11) in einem Träger angebracht ist (sind), welcher durch eine Nabe (12), die mit im wesentlichen axialen Schenkeln (13, 14) versehen ist, welche das (die) Fliehgewicht(e) (11) umgeben und eine Aufnahme (15) für dieses bzw. diese bestimmen, und durch einen diese Aufnahme (15) abschließenden und auf der Nabe (12) befestigten Deckel (16) gebildet ist, wobei dieser Deckel (16) und die Nabe (12) so eingerichtet sind, daß sie eine Radialversetzung des bzw.

der Fliehgewichte (11) zur Glocke (3) hin unter der Wirkung der Zentrifugalkraft gestatten, dadurch gekennzeichnet, daß die Glocke (3) innen mit einer Sprengfeder (24) versehen ist, welche in Reibanlage an der Innenwand der Glocke ist und mindestens mit einem und vorzugsweise zwei Auslösedaumen (24a) versehen ist, welcher bzw. welche mit dem (den) Fliehgewicht(en) (11) zusammenwirken können, wobei die Wirkung dieser Feder (24) darin besteht, die Glocke (3) und ihr Ritzel (4) durch Reibung in Drehung zu versetzen, wenn das (die) Fliehgewicht(e) (11) in Einkuppelstellung ist (sind).

2. Kupplung nach Anspruch 1, dadurch gekennzeichnet, daß der (bzw. die) Daumen (24a) eine Fläche aufweisen, die mit dem (bzw. den) Fliehgewicht(en) zusammenwirkt und so geneigt ist, daß sie parallel zu den Erzeugenden des Fliehgewichts (bzw. der Fliehgewichte) ist, wobei letzteres (letztere) vorzugsweise zylindrisch ist (sind).

## Claims

1. A centrifugal clutch (10) for an actuator for looking the door latch of a motor vehicle, intended to be interposed between an electric motor (1) and a gear train (5) for driving a sorew (7) whereon there is mounted a tapped sleeve (8) for controlling a locking element, this clutch comprising at least one weight (11) and preferably two, disposed in a bell element (3) radially to the output shaft (2) of the motor (1), subjected to the action of an elastic element (21) for returning the weight to a declutched position at rest and capable of being driven by the rotation of the shaft (2) of the motor (1) into a clutching position wherein it is (they are) engaged with the bell element (3), the latter being provided with a pinion (1) for driving the gear train (5) and the weight(s) (11) is (are) mounted in a support constituted by a hub (12) provided with substantially axial branches (13, 14) surrounding the weight(s) (11) and defining a housing (15) for the latter, and by a cover (16) fixed to the hub, closing this housing (15), this cover (16) and the hub (12) being arranged to allow the radial displacement of the weight(s) (11) towards the bell element (3) under the effect of the centrifugal force, characterized in that the bell element (3) is internally provided with a stressed spring (24) bearing with friction on the inner well of the bell element, and provided with at least one and preferably two clutch dogs (24a), capable of cooperating with the weight(s) (11), the function of this spring (24) being to drive the bell element (3) and its pinion (4) in rotation by friction when the weight(s) (11) is (are) in the engaging position.

2. A clutch acoording to claim 1, characterized in that the dog or dogs (24a) have a surface cooperating with the weight(s), inclined in such a way as to be parallel to the generatrices of the weight (or weights), these latter being preferably cylindrical.

# FIG.1

# FIG. 2

FIG.3

FIG.4